# EUROPÄISCHE PATENTSCHRIFT

(11) **EP 2 105 081 B1**
(45) Veröffentlichungstag und Bekanntmachung des Hinweises auf die Patenterteilung: **18.06.2014**
(21) Anmeldenummer: 09004216.9
(22) Anmeldetag: 25.03.2009
(51) Int. Cl.: A47L 15/42, A47L 15/48, F28G 13/00, F28G 15/00, F28D 21/00

(54) **Wärmerückgewinnungseinrichtung mit Selbstreinigung**
Heat reclaim device with self-cleaning
Dispositif de production de récupération de chaleur doté d'un autonettoyage

(30) Priorität: 26.03.2008 DE 102008015798
(43) Veröffentlichungstag der Anmeldung: 30.09.2009
(73) Patentinhaber: MEIKO Maschinenbau GmbH & Co. KG, 77652 Offenburg (DE)
(72) Erfinder: Gaus, Bruno, 77654 Offenburg (DE); Kupetz, Joachim, 77791 Berghaupten (DE); Lehmann, Denis, 77799 Ortenberg (DE); Näger, Thomas, 77654 Offenburg (DE); Peukert, Thomas, 77815 Bühl (DE); Schneider, Vera, 77654 Offenburg (DE)
(74) Vertreter: Hörschler, Wolfram Johannes

(56) Entgegenhaltungen:
- EP-A2- 2 108 299
- WO-A1-93/14364
- DE-A1- 10 334 792
- DE-A1-102004 030 013
- DE-A1-102006 004 756
- DE-U1- 29 915 788
- JP-A- 2007 117 554
- US-A- 4 505 758
- US-A1- 2005 105 583
- US-A1- 2006 144 162

## Beschreibung

### Gebiet der Erfindung

Die Erfindung betrifft eine Wärmerückgewinnungseinrichtung zum Rückgewinnen von Wärmeenergie aus einem fluiden Medium. Weiterhin betrifft die Erfindung ein Reinigungsgerät, welches eine erfindungsgemäße Wärmerückgewinnungseinrichtung umfasst sowie ein Verfahren zum Rückgewinnen von Wärmeenergie aus einem fluiden Medium. Derartige Rückgewinnungseinrichtungen und Verfahren werden insbesondere im Bereich der gewerblichen Geschirrspültechnik eingesetzt, um im großen Maßstab Wärme aus Abwässern und/oder Abluft zurückzugewinnen. Auch in anderen Bereichen der Technik sind derartige Wärmerückgewinnungseinrichtungen jedoch einsetzbar.

### Stand der Technik

Aus den verschiedensten Bereichen der Technik und Naturwissenschaften sind Reinigungsgeräte bekannt, mittels derer verschiedene Arten von Reinigungsgut mit unterschiedlichen Zielsetzungen gereinigt werden können. Eine Zielsetzung ist beispielsweise die zumindest weitgehende Befreiung des Reinigungsgutes von anhaftenden Schmutzresten, eine andere Zielsetzung, welche alternativ oder zusätzlich realisiert werden kann, die Hygienisierung des Reinigungsgutes, welche bis hin zu einer Desinfektion des Reinigungsgutes reichen kann. Die Reinigung erfolgt in der Regel durch Beaufschlagung des Reinigungsgutes mit mindestens einem Reinigungsfluid, welches beispielsweise ein flüssiges Reinigungsfluid (zum Beispiel eine oder mehrere Spülflüssigkeiten, beispielsweise mit einem Reinigungsmittel und/einem Klarspüler versetztes Wasser) und/oder ein gasförmiges Reinigungsfluid, wie beispielsweise Dampf, umfassen kann. Das Reinigungsgut kann beispielsweise Geschirr, Gläser, Tabletts, Tassen, Besteck, medizinische Geräte und/oder Geräte für den Pflegebedarf, Container, Maschinenteile, Kraftfahrzeuge, Züge oder andere Arten von Reinigungsgut umfassen.

In vielen Fällen muss in einem derartigen Reinigungsgerät eine nicht unerhebliche Menge an thermischer Energie aufgebracht werden. Diese thermische Energie kann unmittelbar beim Reinigungsprozess benötigt werden, beispielsweise indem das Reinigungsfluid mit einer erhöhten Temperatur auf das Reinigungsgut aufgebracht wird. Beispielsweise können für einen Klarspülvorgang in einer Geschirrspülmaschine Klarspülflüssigkeiten mit einer Temperatur von ca. 85°C eingesetzt werden. Ein weiteres Beispiel ist die thermische Energie, welche zur Erzeugung des Dampfes in Dampfsterilisatoren und/oder Dampfdesinfektionsgeräten erforderlich ist. Weiterhin können Reinigungsgeräte auch derart eingerichtet sein, dass ein oder mehrere Trocknungsschritte durchgeführt werden. Bei einer derartigen Trocknung kann beispielsweise das Reinigungsgut mit warmer Luft beaufschlagt werden, wofür ebenfalls thermische Energie aufgewendet werden muss.

Insbesondere im gewerblichen Bereich kann dieser thermische Energieaufwand eine erhebliche Größenordnung annehmen, so dass beispielsweise Heizleistungen einen beträchtlichen Beitrag zu den gesamten Betriebskosten des Reinigungsgerätes bilden können. In gewerblichen Geschirrspülmaschinen betragen die Heizleistungen beispielsweise von einigen 10 kW bis hin zu einigen 100 kW, abhängig von beispielsweise dem Betriebszustand und/oder der Ausgestaltung der Geschirrspülmaschine.

Insofern sind insbesondere aus dem Bereich der Großküchen zahlreiche Ansätze bekannt, den Energiebedarf durch Wärmerückgewinnung aus Abwasser und/oder Abluft zu verringern. Die Grundkonzepte dieser Wärmerückgewinnung sind beispielsweise in H. Klein und G. Lindner, Wärmerückgewinnung in Großküchen, Technische Rundschau, Bern, Nr. 10, 10. März 1981, Seiten 17 und 18, umrissen. Für die Wärmerückgewinnung bieten sich insbesondere Wärmetauscher und Wärmepumpen an.

Herkömmliche Wärmerückgewinnungseinrichtungen, insbesondere Wärmetauscher, weisen jedoch in der Praxis einige Nachteile auf. So besteht ein wesentlicher Nachteil insbesondere darin, dass Wärmetauscher welche zur Wärmerückgewinnung aus Abluft oder Abwässern eingesetzt werden, Verschmutzungseffekte aufweisen. Dementsprechend müssen derartige Wärmetauscher und/oder Wärmerückgewinnungseinrichtungen in der Regel in regelmäßigen Intervallen gewartet werden, da insbesondere die Effizienz des Wärmeaustauschs mit zunehmender Verschmutzung sinkt. Derartige Wartungen sind jedoch unerwünscht und teuer, da insbesondere ein Dauerbetrieb für den gewerblichen Einsatz für derartige Wartungen unterbrochen werden muss. Zudem sind viele Wärmetauscher derart komplex aufgebaut, dass nicht in allen Fällen eine einfache und befriedigende Reinigung vor Ort durchgeführt werden kann.

Es sind daher aus dem Stand der Technik verschiedene Systeme bekannt, bei welchen Wärmetauscherflächen automatisch gereinigt werden. So offenbart beispielsweise DE 10 2005 050 305 B3 eine Geschirrspülmaschine mit integrierter Reinigungsvorrichtung für einen Wärmetauscher und/oder eine Wärmepumpe zur Behandlung von Wrasen und einer Vorrichtung zum Zuführen von Wrasen zu dem Wärmetauscher und/oder der Wärmepumpe. Dabei ist die integrale Reinigungsvorrichtung derart ausgestaltet, dass der Wärmetauscher und/oder die Wärmepumpe regelmäßig mit einem Reinigungsfluid gespült werden. Auch aus DE 295 21 413 U1 ist eine Betriebs-Kühlerreinigungsanlage bekannt, bei welcher automatisch mittels verfahrbaren Reinigungsdüsen eine Kühl- oder Heizeinrichtung gereinigt werden kann.

Die aus dem Stand der Technik, insbesondere aus der DE 10 2005 050 305 B3, bekannten Wärmetauscher bzw. Wärmerückgewinnungseinrichtungen mit Selbstreinigungsvorrichtungen weisen jedoch insbesondere für den Einsatz in gewerblichen Geschirrspülmaschinen, jedoch auch in anderen Bereichen der Wärmerückgewinnung, erhebliche Nachteile auf. So sind beispielsweise selbstreinigende Wärmetauscher wie in DE 10 2005 050 305 B3 beschrieben, entweder nur für die Selbstreinigung von Wärmetauschern für die Wärmerückgewinnung aus Abluft einsetzbar, oder der Reinigungsbetrieb bzw. der Betrieb des Wärmetauschers muss für den Selbstreinigungsprozess unterbrochen werden. Insbesondere lässt das Sprühdüsenprinzip der Selbstreinigung nicht einsetzen für Wärmetauscher, welche im Bereich der Wärmerückgewinnung aus Abwässern eingesetzt werden sollen.

Erschwerend kommt hinzu, dass, insbesondere im Bereich der gewerblichen Geschirrspültechnik, Abluft und Abwässer in vielen Fällen hohe Anteile an pflanzlichen oder mineralischen Fetten und/oder Ölen umfassen. Da prinzipbedingt für einen möglichst hohen Wärmeübertrag auf die Wärmetauscherflächen der Wärmetauscher eine Kühlung der Wärmetauscherflächen erforderlich ist, erfolgt in vielen Fällen eine Verfettung dieser Wärmetauscherflächen, da in Abwässern gelöste und/oder emulgierte Fette oder in der Abluft enthaltene Fettanteile sich auf den Wärmetauscherflächen ablagern und dort zumindest teilweise verfestigen. Diese prinzipbedingte Ausbildung von Fettschichten auf den Wärmetauscherflächen führt zu einer Verschlechterung des Wärmeübertrags und somit zu einer funktionellen Beeinträchtigung der Wärmerückgewinnungseinrichtungen. Mittels der beschriebenen Sprühverfahren, wie beispielsweise der in DE 10 2005 050 305 B3 beschriebenen Selbstreinigung, lassen sich derartige fettige Verunreinigungen in der Praxis kaum beseitigen, oder es ist der Einsatz von aggressiven Reinigungsmitteln erforderlich, welche wiederum zu einer erhöhten Umweltbelastung führen würden. Erheblich höher ist die Problematik noch bei Wärmerückgewinnungseinrichtungen, welche in Abwassersystemen eingesetzt werden sollen, da hier eine Spülung der Wärmerückgewinnungseinrichtung, insbesondere der Wärmetauscherplatten, mit einem Fette und andere Verunreinigungen lösenden Reinigungsfluid in der Praxis kaum möglich ist.

Das Dokument US 4,505,758 A beschreibt eine weitere bekannte Wärmerückgewinnungseinrichtung und ein bekanntes Verfahren zum Rückgewinnen von Wärmeenergie.

### Aufgabe der Erfindung

Es ist daher eine Aufgabe der vorliegenden Erfindung, eine Wärmerückgewinnungseinrichtung sowie ein Verfahren zur Wärmerückgewinnung bereitzustellen, welche die oben beschriebenen Nachteile bekannter Wärmerückgewinnungseinrichtungen und bekannter Verfahren zumindest weitgehend vermeiden. Insbesondere soll die Wärmerückgewinnungseinrichtung einen nahezu wartungsfreien Dauerbetrieb ermöglichen, wobei auch ein Einsatz in einem Abwassersystem, welches von fetthaltigen, flüssigen Medien durchströmt wird, möglich sein soll.

### Beschreibung der Erfindung

Die Erfindung geht aus von dem Grundgedanken, dass, insbesondere für den Einsatz in Wärmerückgewinnungssystemen zur Wärmerückgewinnung aus Abwässern, fettige Verunreinigungen durch einen kurzfristigen Wärmeeintrag in die ansonsten kalten Wärmetauscherflächen beseitigt werden können. Die Verunreinigungen werden dabei aufgeschmolzen oder zumindest verformbar und lassen sich somit durch beispielsweise die an der Wärmerückgewinnungseinrichtung vorbeiströmenden oder durch diese Wärmerückgewinnungseinrichtung hindurchströmenden Abwässer leicht abtragen. Auch für in anderen fluiden Medien eingesetzte Wärmerückgewinnungseinrichtungen, wie beispielsweise Wärmerückgewinnungseinrichtungen in Abluftströmen von Geschirrspülmaschinen, lassen sich auf diese Weise reinigen, da aufgeschmolzene Verunreinigungen beispielsweise leichter abgespült werden können oder vollständig beispielsweise in einen Auffangbehälter oder ein anderes Entsorgungssystem abtropfen können.

Es wird daher eine Wärmerückgewinnungseinrichtung zum Rückgewinnen von Wärmeenergie aus einem fluiden Medium vorgeschlagen, welche insbesondere für den Einsatz in einem Abwassersystem einer Geschirrspülmaschine einsetzbar ist. Wie oben beschrieben, lässt sich die Wärmerückgewinnungseinrichtung jedoch auch in anderen fluiden Medien, beispielsweise Abluftströmen, oder in anderen Arten von Reinigungsgeräten einsetzen. Allgemein ist das Anwendungsgebiet dort zu sehen, wo fluide Medien mit einer gegenüber der Umgebungstemperatur erhöhten Temperatur auftreten, die normalerweise ungenutzt entweichen würden, also beispielsweise in Abluft-, Abwasser- oder sonstigen Entsorgungssystemen.

Die vorgeschlagene Wärmerückgewinnungseinrichtung umfasst mindestens einen Wärmetauscher mit mindestens einer Wärmetauscherfläche. Hinsichtlich der Ausgestaltung des Wärmetauschers kann auf nahezu alle bekannten Wärmetauschertechniken zurückgegriffen werden, also beispielsweise Plattenwärmetauscher mit von einem Kühl- oder Transportmedium durchströmten oder überströmten Wärmetauscherplatten, nicht-fluidgekühlten Wärmetauscherplatten, Lamellenwärmetauschern, Kühlschlangenwärmetauschern oder ähnlichen bekannten Wärmetauschern.

Zur Umsetzung des oben beschriebenen Erfindungsgedankens umfasst die Wärmerückgewinnungseinrichtung weiterhin mindestens eine mit der Wärmetauscherfläche thermisch gekoppelte Heizeinrichtung, welche eingerichtet ist, um die mindestens eine Wärmetauscherfläche zumindest kurzfristig auf eine Reinigungstemperatur aufzuheizen. Diese Reinigungstemperatur kann beispielsweise oberhalb von 50°C oder 60°C liegen, insbesondere oberhalb von 80°C und kann auf die zu erwartenden Verunreinigungen angepasst werden. Die Heiztemperatur kann durch zusätzliche Temperaturfühler überwacht werden.

Weiterhin weist die Wärmerückgewinnungseinrichtung mindestens eine Steuerung auf, welche eingerichtet ist, um einen Selbstreinigungsprozess des Wärmetauschers durchzuführen. Wie oben beschrieben wird bei dem Selbstreinigungsprozess die Wärmetauscherfläche kurzfristig mittels der Heizeinrichtung aufgeheizt, beispielsweise auf die zuvor genannten Temperaturen. Auch höhere oder niedrigere Temperaturen sind jedoch möglich, beispielsweise Temperaturen oberhalb von 90°C oder 100°C. Wie oben beschrieben, wird bei diesem Selbstreinigungsprozess des Wärmetauschers durch Wärmeeinwirkung eine Verunreinigungsschicht vorzugsweise aufgeschmolzen oder zumindest erweicht, so dass diese leichter entfernbar ist. Für den eigentlichen Abtrag der Verunreinigung können dann zusätzliche Medien sorgen, insbesondere das fluide Medium selbst.

Die mindestens eine Steuerung kann beispielsweise eine oder mehrere elektronische Komponenten umfassen. Beispielsweise kann die Steuerung außerdem mindestens ein Datenverarbeitungsgerät, insbesondere mindestens einen Mikrocomputer, umfassen, also insbesondere einen Prozessor, und gegebenenfalls einen oder mehrere nicht-flüchtige oder flüchtige Speicher, Ein- und Ausgabegeräte, Schnittstellen oder ähnliches.

Die vorgeschlagene Wärmerückgewinnungseinrichtung ermöglicht somit eine schnelle und effiziente Selbstreinigung, ohne dass der Betrieb eines Gerätes oder einer Umgebung, in welcher die Wärmerückgewinnungseinrichtung eingesetzt wird, durch den Selbstreinigungsprozess beeinflusst werden muss. Insbesondere kann beispielsweise ein Spülbetrieb einer Geschirrspülmaschine oder eine andere Art von Reinigungsbetrieb ohne Unterbrechung fortgesetzt werden, wobei lediglich während des Selbstreinigungsprozesses die Wärmerückgewinnung vermindert oder ausgesetzt wird. Unter "kurzfristig" ist dabei ein Selbstreinigungsprozess zu verstehen, welcher beispielsweise zwischen 30 Sekunden und 3 Stunden, vorzugsweise jedoch im Bereich von wenigen Minuten (beispielsweise 1 bis 30 Minuten) durchgeführt wird. Auch kürzere oder längere Selbstreinigungsprozesse sind jedoch prinzipiell möglich und sollen von dem Begriff "kurzfristig" erfasst sein. Der Begriff "kurzfristig" bedeutet somit lediglich, dass die Heizeinrichtung nicht im Dauerbetrieb betrieben wird, so dass die Gesamtfunktion der Wärmerückgewinnung durch den Selbstreinigungsprozess nicht erheblich unterbrochen wird.

Für die Heizeinrichtung lassen sich grundsätzlich beliebige Arten bekannter Heizeinrichtungen einsetzen, welche beispielsweise resistive Heizeinrichtungen und/oder Infrarot-Heizeinrichtungen und/oder andere Arten von Heizeinrichtungen umfassen können. Besonders bevorzugt ist es jedoch, den Wärmetauscher der Wärmerückgewinnungseinrichtung mit einer Wärmepumpe zu koppeln, wie dies beispielsweise auch in H. Klein und G. Lindner: Wärmerückgewinnung in Großküchen, Technische Rundschau, Bern, Nr. 10, 10. März 1981, Seiten 17 und 18, beschrieben wird. Unter einer Wärmepumpe ist in diesem Zusammenhang eine "Hebevorrichtung" zu verstehen, welche eingerichtet ist, um ein Medium von einem niedrigeren Temperatur- auf ein höheres Temperaturniveau anzuheben. Dabei soll, im Gegensatz zu herkömmlichen Wärmepumpen, welche nicht umkehrbar sind, im Rahmen der vorliegenden Erfindung vorzugsweise der thermodynamische Prozess durch die Wärmepumpe auch umkehrbar sein. Dies bedeutet insbesondere, dass eine Wärmepumpe einem ersten Medium Wärme entziehen kann, um diese einem zweiten Medium zuzuführen, wobei der Wärmepumpe von außen Energie (beispielsweise mechanische und/oder elektrische Energie) zugeführt wird.

Die Kombination des Wärmetauschers mit der Wärmepumpe bietet den erheblichen Vorteil, dass die bei der Wärmerückgewinnung üblicherweise auftretenden vergleichsweise niedrigen Temperaturen ausgeglichen werden können. So liegen beispielsweise übliche Abwassertemperaturen im Bereich gewerblicher Geschirrspülmaschinen bei ca. 60°. Selbst bei einer vollständigen Übertragung dieser Temperatur auf ein Transportmedium, beispielsweise eine Klarspülflüssigkeit, reicht diese Temperatur in der Regel für eine sinnvolle Nutzung in der Geschirrspülmaschine selbst nicht aus, so dass eine zusätzlich Aufheizung erforderlich wäre. Durch Zwischenschaltung einer Wärmepumpe kann vorzugsweise das Transportmedium, beispielsweise ein in einem Reinigungsgerät eingesetztes Reinigungsfluid, welches zuvor mittels der dem fluiden Medium entzogenen Wärme aufgeheizt wird, auf eine Zieltemperatur erwärmt werden, beispielsweise eine Temperatur zwischen 80°C und 90°C, welche zum Beispiel in einem Klarspülprozess einsetzbar ist.

Wie oben beschrieben, sind Wärmepumpen also in ihrer "Pumprichtung" umkehrbar. Dieser Effekt wird erfindungsgemäß in einer bevorzugten Ausgestaltung genutzt. So kann beispielsweise in einem Normalbetrieb die Wärmepumpe in der oben beschriebenen Richtung pumpen, um das Transportmedium zusätzlich aufzuwärmen. Während des Selbstreinigungsprozesses hingegen kann die Wärmepumpe umgekehrt werden und dann als Heizeinrichtung wirken, um die mindestens eine Wärmetauscherfläche aufzuheizen. Der Betrieb der Wärmepumpe kann beispielsweise ebenfalls durch die Steuerung gesteuert werden, beispielsweise durch eine entsprechende Programmautomatik.

Auf diese Weise lassen sich die Vorteile der Erfindung, nämlich die Selbstreinigung mittels eines kurzfristigen Wärmeeintrags und dadurch die Beseitigung insbesondere fetter Verunreinigungen, mit den Vorteilen der Wärmepumpenkopplung kombinieren, mittels derer eine Anhebung der rückgewonnenen Wärmeenergie auf ein nutzbares Temperaturniveau möglich ist. Auf zusätzliche Heizelemente kann in diesem Fall verzichtet werden.

Grundsätzlich lassen sich im Rahmen dieser Ausgestaltung der Erfindung die meisten bekannten Arten von Wärmepumpen einsetzen, beispielsweise Kompressionswärmepumpen oder ähnliche Arten von Wärmepumpen. Besonders bevorzugt ist es jedoch, wenn thermoelektrische Wärmepumpen eingesetzt werden, insbesondere Wärmepumpen, die mindestens ein Peltierelement umfassen. Peltierelemente sind elektrothermische Wandler (oder thermoelektrische Wärmepumpen), welche auf dem Peltier-Effekt basieren und bei Stromdurchfluss eine Temperaturdifferenz zwischen einer Wärmeaufnahmeseite und einer Wärmeabgabeseite erzeugen. Auch Peltierelemente sind Wärmepumpen im Sinne der obigen Definition, da bei einer Umkehr des Stromflusses in der Regel eine Vertauschung der Funktionen der Wärmeaufnahmeseite und der Wärmeabgabeseite eintritt, so dass die vormals kühlende Seite nunmehr zur heizenden Seite wird. Insofern lassen sich Peltierelemente, welche einfach und kostengünstig realisierbar sind, welche in vielen beliebigen Geometrien einsetzbar sind und welche Temperaturdifferenzen bis zu ca. 70°C erzeugen können, gewinnbringend in der oben beschriebenen Wärmerückgewinnungseinrichtung einsetzen. Insbesondere können die Wärmerückgewinnungseinrichtung und/oder die Steuerung eingerichtet sein, um während des Selbstreinigungsprozesses das Peltierelement elektrisch umzupolen.

Der oben beschriebene Selbstreinigungsprozess kann beispielsweise zu vorgegebenen Zeiten und/oder in regelmäßigen oder unregelmäßigen Intervallen und/oder als Teil eines Reinigungsprogramms (beispielsweise vor und/oder nach und/oder während eines Reinigungsprogramms) durchgeführt werden. Besonders bevorzugt ist es jedoch, wenn die Wärmerückgewinnungseinrichtung derart eingerichtet ist, dass diese gezielt auf auftretende Verschmutzungen reagieren kann. So umfasst die Wärmerückgewinnungseinrichtung mindestens einen Verschmutzungssensor zur Detektion eines Verschmutzungsgrades der Wärmetauscherfläche. Die Steuerung kann dann insbesondere eingerichtet sein, um bei Erreichen oder Überschreiten eines vorgegebenen Verschmutzungsgrades den Reinigungsprozess durchzuführen, insbesondere um den Reinigungsprozess automatisch durchzuführen. Anstelle einer automatischen Durchführung kann jedoch auch beispielsweise eine Warnung an einen Benutzer ausgegeben werden, dass nunmehr ein Selbstreinigungsprozess durchgeführt werden sollte.

Zur Detektion der Verschmutzung bzw. des Verschmutzungsgrades können zahlreiche, insbesondere aus dem Bereich der Geschirrspültechnik oder der Waschtechnik bekannte Verschmutzungssensoren eingesetzt werden. So können beispielsweise optische Verschmutzungssensoren, insbesondere Infrarot-Sensoren, Trübungs-Sensoren, Absorptions-Sensoren, Reflexions-Sensoren oder ähnliche Arten von Sensoren eingesetzt werden. Alternativ oder zusätzlich können auch elektrische Verschmutzungssensoren eingesetzt werden, beispielsweise Verschmutzungssensoren, welche auf einer elektrischen Widerstandsmessung basieren. Weiterhin können alternativ oder zusätzlich, auch kapazitive Verschmutzungssensoren eingesetzt werden, da beispielsweise eine Schmutzschicht auf Wärmetauscherplatten zu einer veränderten Kapazität dieser Wärmetauscherplatten führt. Verschiedene andere Prinzipien der Verschmutzungssensoren sind denkbar.

Als Verschmutzungssensor werden mindestens zwei Temperatursensoren eingesetzt. Die Temperatursensoren sind derart eingerichtet, dass diese eine Temperatur des fluiden Mediums vor und nach einem Durchströmen und/oder Überströmen des Wärmetauschers erfassen. Steigt die Verschmutzung der Wärmetauscherplatten, so sinkt die Effizienz des Wärmetauschers, und die Temperaturdifferenz vor und nach dem Durchströmen des Wärmetauschers sinkt. Auf diese Weise wird also ebenfalls eine Verschmutzung wirksam detektiert, und es kann beispielsweise automatisch ein Selbstreinigungsprozess ausgelöst werden.

In Erweiterung des oben genannten Prinzips können auch Temperaturdifferenzen beispielsweise zwischen dem in die Wärmerückgewinnungseinrichtung einströmenden fluiden Medium und einer Temperatur eines Transportmediums nach Durchströmen der Wärmerückgewinnungseinrichtung ermittelt werden. In jedem Fall beruht das Prinzip dann darauf, dass eine von dem fluiden Medium an den Wärmetauscher und/oder ein mit dem Wärmetauscher thermisch gekoppeltes Transportmedium übertragene Wärmemenge und/oder eine Wärmeleistung erfasst wird und aus dieser übertragenen Wärmemenge bzw. Wärmeleistung auf einen Verschmutzungsgrad der Wärmerückgewinnungseinrichtung, insbesondere des Wärmetauschers, geschlossen wird. Sinkt der gemessene Wärmeübertragungsgrad, so kann auf eine steigende Verschmutzung rückgeschlossen werden.

Neben der beschriebenen Wärmerückgewinnungseinrichtung wird weiterhin ein Reinigungsgerät zum Reinigen mindestens eines Reinigungsgutes vorgeschlagen, welches mindestens eine Wärmerückgewinnungseinrichtung nach dem oben beschriebenen Prinzip umfasst. Das Reinigungsgerät kann insbesondere mindestens eine Geschirrspülmaschine zum Reinigen von Reinigungsgut umfassen, wobei jedoch auch andere Arten von Reinigungsgeräten verwendbar sind. Neben Geschirrspülmaschinen können insbesondere manuelle Reinigungssysteme, Reinigungsgeräte zum Reinigen von Krankenhaus- und/oder Pflegebedarf sowie ärztlichen Instrumenten, Reinigungsgeräte zum Reinigen von Maschinenteilen, Autowaschanlagen oder ähnliches umfasst bzw. von dem Begriff "Reinigungsgeräte" umschlossen sein. Dabei kann die Wärmerückgewinnungseinrichtung zum Rückgewinnen von Wärme aus gasförmigen aus flüssigen fluiden Medien genutzt werden. Wie oben beschrieben, ist es besonders bevorzugt, die Wärmerückgewinnungseinrichtung dort einzusetzen, wo fett- und/oder ölhaltige fluide Medien abgeführt werden. In diesem Bereich sind besonders die gewerblichen Durchlaufgeschirrspülmaschinen mit mindestens zwei von dem Reinigungsgut nacheinander zu durchlaufenden Reinigungszonen zu erwähnen und/oder Einkammergeschirrspülmaschinen für den gewerblichen Einsatz, welche mindestens einen von der Reinigungskammer getrennten Tank, insbesondere einen Boiler, umfassen. Auch andere Arten von Reinigungsgeräten, welche mindestens eine Reinigungskammer zur Beaufschlagung des Reinigungsgutes mit mindestens einem Reinigungsfluid umfassen, sind jedoch möglich.

Das vorgeschlagene Reinigungsgerät umfasst neben der Wärmerückgewinnungseinrichtung mindestens ein Abwassersystem zur Ableitung verbrauchten Reinigungsfluids. Diese Ableitung kann beispielsweise in einen Entsorgungstank und/oder ein Netz, beispielsweise ein Abwassemetz, erfolgen. Das Abwassersystem kann beispielsweise einen oder mehrere Tanks, Rohre oder ähnliches umfassen, je nach Art des Reinigungsfluids. Die Wärmerückgewinnungseinrichtung ist thermisch mit dem Abwassersystem gekoppelt und ist eingerichtet, um nach dem oben beschriebenen Prinzip zurückgewonnene Wärme einem Reinigungsprozess wieder zuzuführen.

Es sei darauf hingewiesen, dass die erfindungsgemäße Wärmerückgewinnungseinrichtung auch an anderen Stellen im Reinigungsgerät eingesetzt werden kann außer im Abwassersystem. So kann beispielsweise, alternativ oder zusätzlich zur Anordnung im Abwassersystem, das Reinigungsgerät weiterhin die Wärmerückgewinnungseinrichtung in einem Abluftsystem umfassen. Auch hier ist die Wärmerückgewinnungseinrichtung vorteilhaft einsetzbar.

Der Begriff "Abwassersystem" ist dabei weit zu fassen und betrifft jegliche Art von System, welche zur Ableitung bzw. Entsorgung von verbrauchtem Reinigungsfluid geeignet ist. Das verbrauchte Reinigungsfluid kann dabei der Wärmerückgewinnungseinrichtung beispielsweise kontinuierlich oder chargenweise zugeführt werden und die Wärmerückgewinnungseinrichtung somit kontinuierlich oder chargenweise beispielsweise durch- oder überströmen.

Besonders bevorzugt ist es, wenn das Reinigungsgerät mindestens ein Klarspülsystem zur Beaufschlagung des Reinigungsgutes mit mindestens einem Klarspülfluid umfasst. Dieses Klarspülsystem kann beispielsweise als eines mindestens einem Vorspülsystem nachgeschaltetes System in einer Durchlaufgeschirrspülmaschine eingesetzt werden und/oder kann in einer Einkammergeschirrspülmaschine als separates System, welches in einem Klarspülschritt zu- bzw. eingeschaltet wird, ausgestaltet sein. Auch andere Arten von Klarspülsystemen sind jedoch denkbar. Das Klarspülfluid kann beispielsweise ein wässriges Fluid oder Wasser sein, welchem gegebenenfalls ein oder mehrere Zusätze, insbesondere ein Klarspüler, beigemischt sein können. Derartige Klarspülfluids werden beispielsweise in Geschirrspülmaschinen im Temperaturbereich zwischen 80°C und 90°C, insbesondere bei 85°C, eingesetzt, so dass sich insbesondere in diesem Bereich die Rückführung von rückgewonnener Wärme besonders vorteilhaft bemerkbar macht. Mittels der Wärmerückgewinnungseinrichtung kann Wärme aus dem verbrauchten Reinigungsfluid rückgewonnen werden und auf das Klarspülfluid übertragen werden. Dies kann beispielsweise dadurch erfolgen, dass die Wärmerückgewinnungseinrichtung von einem Transportfluid durchströmt wird, wobei dieses Transportfluid auch das Klarspülfluid und/oder das Reinigungsfluid selbst sein kann. Mittels dieses Transportfluids kann dann die Wärme beispielsweise in einen Klarspültank und/oder einen Boiler überführt werden und/oder kann unmittelbar einem Klarspüldüsensystem des Klarspülsystems zugeführt werden. Anstelle einer indirekten Wärmeübertragung mittels eines Transportfluids kann der Wärmeübertrag naturgemäß auch unmittelbar beispielsweise auf das Klarspülfluid erfolgen, beispielsweise indem die Wärmerückgewinnungseinrichtung unmittelbar mit einem Rohrleitungssystem und/oder einem Tank (beispielsweise einem Klarspültank und/oder einem Boiler) des Klarspülsystems gekoppelt ist. In diesem Fall übernimmt das Klarspülfluid die Rolle des Transportfluids.

Neben der vorgeschlagenen Wärmerückgewinnungseinrichtung und dem Reinigungsgerät, jeweils in einer der oben beschriebenen Ausführungsformen, wird weiterhin ein Verfahren zum Rückgewinnen von Wärmeenergie aus einem fluiden Medium vorgeschlagen, welches für den Betrieb eines Reinigungsgerätes gemäß der obigen Beschreibung und/oder einer Wärmerückgewinnungseinrichtung gemäß der obigen Beschreibung geeignet sein soll. Diesbezüglich kann für mögliche Wärmerückgewinnungseinrichtungen und deren Ausgestaltungen beispielsweise auf die obige Beschreibung verwiesen werden.

Bei dem Verfahren wird in einem Normalbetrieb einem fluiden Medium mittels mindestens eines Wärmetauschers mit mindestens einer Wärmetauscherfläche Wärme entzogen. Neben dem Normalbetrieb (das heißt zeitgleich, zeitversetzt oder zu verschiedenen Zeiten, beispielsweise in unterschiedlichen Programmzyklen) wird ein Selbstreinigungsprozess durchgeführt, bei welchem die Wärmetauscherfläche kurzfristig aufgeheizt wird, wobei Verunreinigungen von der Wärmetauscherfläche zumindest teilweise entfernt werden. Dieses Entfernen kann, wie oben dargelegt, beispielsweise über ein Aufschmelzen und/oder ein Erweichen dieser Verunreinigungen erfolgen. Die entfernten Verunreinigungen können beispielsweise in dem fluiden Medium gelöst und/oder dispergiert und/oder emulgiert werden und/oder von dem fluiden Medium weggeschwemmt werden.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

### Im Einzelnen zeigt:

- Figur 1: ein mögliches Ausführungsbeispiel einer erfindungsgemäßen Wärmerückge winnungseinrichtung mit einem Peltierelement; und
- Figur 2: ein Ausführungsbeispiel einer Durchlaufgeschirrspülmaschine mit einer erfindungsgemäßen Wärmerückgewinnungseinrichtung.

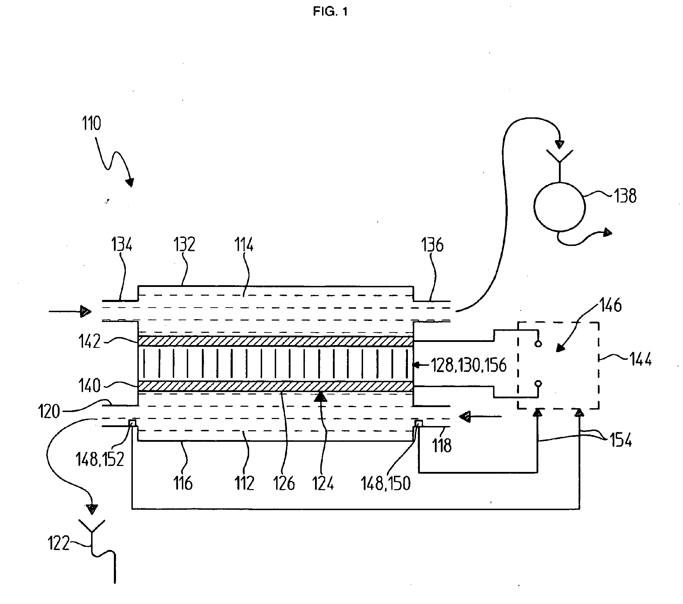

In Figur 1 ist ein mögliches Ausführungsbeispiel einer erfindungsgemäßen Wärmerückgewinnungseinrichtung 110 dargestellt. Diese Wärmerückgewinnungseinrichtung 110, welche beispielsweise in Reinigungsgeräten eingesetzt werden könnte, dient zur Wärmerückgewinnung aus einem fluiden Medium 112, von welchem im Folgenden angenommen sei, dass es sich um ein verbrauchtes Reinigungsfluid, insbesondere Spülwasser mit Reinigungszusätzen und Verunreinigungen, handeln soll. Die rückgewonnene Wärme soll auf ein Transportmedium 114 übertragen werden. Zu diesem Zweck umfasst die Wärmerückgewinnungseinrichtung eine erste Kammer 116, mit einem ersten Einlass 118 und einem ersten Auslass 120, wobei der erste Einlass 118 beispielsweise mit einem Abfluss einer Geschirrspülmaschine verbunden werden kann, und wobei der erste Auslass 120 beispielsweise mit einem Abfluss 122 verbunden werden kann. Die erste Kammer 116 ist dabei lediglich symbolisch in Figur 1 dargestellt und umfasst hier beispielsweise eine erweiterte Kammer, wobei jedoch auch andere Ausgestaltungen möglich sind, beispielsweise schlangen- oder mäanderförmige Führungen des fluiden Mediums, ein Durchströmen mehrerer Einzelkammern, welche parallel oder hintereinander angeordnet sein können oder ähnliche Vorrichtungen, welche einen optimalen Wärmeübertrag ermöglichen.

Weiterhin umfasst die Wärmerückgewinnungseinrichtung 110 einen Wärmetauscher 124 mit einer Wärmetauscherfläche 126. Die Wärmetauscherfläche 126 und der Wärmetauscher 124 sind ebenfalls in Figur 1 lediglich symbolisch angedeutet, denn die Wärmetauscherfläche 126 kann beispielsweise auch komplexere Formen (zum Beispiel Lamellenformen etc.) annehmen. Auch ist die Wärmetauscherfläche 126 in diesem Ausführungsbeispiel lediglich als obere Fläche der ersten Kammer 116 eingezeichnet. Es sind jedoch auch andere Ausgestaltungen der Wärmetauscher 124 möglich, beispielsweise Mantelstrom-Wärmetauscher oder Koaxial-Wärmetauscher, bei welchen die Wärmetauscherfläche 126 die erste Kammer 116 nahezu vollständig umschließt.

Neben dem Wärmetauscher 124 umfasst die Wärmerückgewinnungseinrichtung in dem in Figur 1 dargestellten Ausführungsbeispiel eine Wärmepumpe 128 in Form eines Peltierelements 130. Dieses Peltierelement 130 verbindet die erste Kammer 116 mit einer zweiten Kammer 132, welche über einen zweiten Einlass 134 und zweiten Auslass 136 verfügt. Durch diese zweite Kammer 132 strömt das Transportmedium 114. Während der zweite Einlass 134 der zweiten Kammer 132 beispielsweise mit einem Frischwasserzulauf verbunden ist, kann der zweite Auslass 136 beispielsweise mit einem Tank 138 eines Reinigungsgerätes, beispielsweise einer Geschirrspülmaschine, verbunden sein. Bei diesem Tank 138 kann es sich beispielsweise um einen Frischwassertank und/oder einen Klarspültank und/oder einen Boiler handeln. Auch eine direkte Rückführung des Transportmediums 114 in das Reinigungsgerät, ohne Zwischenschaltung eines Tanks 138, ist denkbar.

Das Peltierelement 130 wirkt in dem in Figur 1 dargestellten Ausführungsbeispiel als Wärmepumpe 128. Über die Wärmetauscherfläche 126 wird Wärme von dem fluiden Medium 112 aufgenommen und auf einem höheren Temperaturniveau an das Transportmedium 114 abgegeben. In diesem "Normalbetrieb" wird die der ersten Kammer 116 zugewandte erste Seite 140 des Peltierelements als wärmeaufnehmende Seite und die der zweiten Kammer 132 zugewandte zweite Seite 142 des Peltierelements als wärmeabgebende Seite. Das Peltierelement 130 ist mit einer Steuerung 144 verbunden, welche eine Stromquelle 146 umfasst, die eine derartige "Polung" des Peltierelements 130 im Normalbetrieb bewirkt.

Bei diesem Normalbetrieb des Peltierelements 130 bzw. der Wärmepumpe 128 wird die Wärmetauscherfläche 126 somit durch das Peltierelement 130 gekühlt. Die Temperatur des Transportmediums 114 kann durch eine entsprechende Einstellung und Ausgestaltung des Peltierelements 130 beispielsweise auf eine bestimmte Endtemperatur des Transportmediums 114 eingestellt werden, beispielsweise eine Endtemperatur von 80 bis 90°C.

Aufgrund der niedrigen Temperatur der Wärmetauscherfläche 126 neigt jedoch diese Wärmetauscherfläche 126 zu einer Verschmutzung, insbesondere einer Ablagerung von fettigen Verunreinigungen, da Fette einen vergleichsweise hohen Schmelzpunkt aufweisen. Mit einer derartigen Ablagerung von Verunreinigungen auf der Wärmetauscherfläche 126 sinkt jedoch der Wärmeübertragungskoeffizient dieser Wärmetauscherfläche 126, und somit die Effizienz des Wärmeübertrags von dem fluiden Medium 112 auf das Transportmedium 114.

Die Wärmerückgewinnungseinrichtung 110 umfasst daher in dem in Figur 1 dargestellten Ausführungsbeispiel zwei Verschmutzungssensoren 148, welche in diesem Ausführungsbeispiel in Form eines ersten Temperatursensors 150 am ersten Einlass 118 der ersten Kammer 116 und eines zweiten Temperatursensors 152 am ersten Auslass 120 der ersten Kammer 116 ausgebildet sind. Diese Temperatursensoren 150, 152 sind über Signalleitungen 154 mit der Steuerung 144 verbunden. Die Temperaturdifferenz zwischen dem ersten Einlass 118 und dem ersten Auslass 120 ist ein Maß für die an den Wärmetauscher 124 und somit an das Transportmedium 114 übertragene Wärmemenge. Sinkt daher die absolute Temperaturdifferenz unter beispielsweise eine vorgegebene Schwelle, so kann die Steuerung 144 beispielsweise erkennen, dass die Verschmutzung der Wärmetauscherfläche 126 einen kritischen Wert erreicht hat.

Dann kann die Steuerung 144 auf einen Reinigungsprozess umschalten, bei welchem das Peltierelement 130 als Heizeinrichtung 156 genutzt wird. Zu diesem Zweck wird die Stromquelle 146, welche das Peltierelement 130 mit Strom beaufschlagt, umgepolt, so dass nunmehr die erste Seite 140 des Peltierelements 130 als wärmeabgebende Fläche wirkt, und die zweite Seite 142 des Peltierelements 130 als wärmeaufnehmende Fläche. Der Fluss des fluiden Mediums 114 kann während dieses Reinigungsprozesses beispielsweise unterbunden werden, beispielsweise durch eine entsprechende Ventilschaltung, um zu verhindern, dass dem Tank 138 abgekühltes Transportmedium 114 zugeführt wird.

Dieses kurzfristige Aufheizen der ersten Seite 140 des Peltierelements 130 führt vorzugsweise zu einem Abschmelzen der Verunreinigungen auf der Wärmetauscherfläche 126. Diese Verunreinigungen, welche auf diese Weise von der Wärmetauscherfläche 126 abgelöst wurden, können beispielsweise von dem fluiden Medium 112 weggespült werden. Der. Selbstreinigungsprozess kann beispielsweise für eine vorgegebene Zeitdauer durchgeführt werden oder kann auch aktiv überwacht werden, beispielsweise indem Verschmutzungssensoren 148 den Verschmutzungsgrad der Wärmetauscherfläche 126 aktiv messen und den Selbstreinigungsprozess beenden, wenn eine vorgegebene Reinheit dieser Wärmetauscherfläche 126 erreicht ist. Dann kann wieder in den Normalbetrieb umgeschaltet werden, beispielsweise wiederum durch Umpolen der Stromquelle 146 des Peltierelements 130. Auf diese Weise kann effizient und schnell und ohne Wartungsaufwand, beispielsweise automatisiert, ein Selbstreinigungsprozess der Wärmerückgewinnungseinrichtung 110 durchgeführt werden.

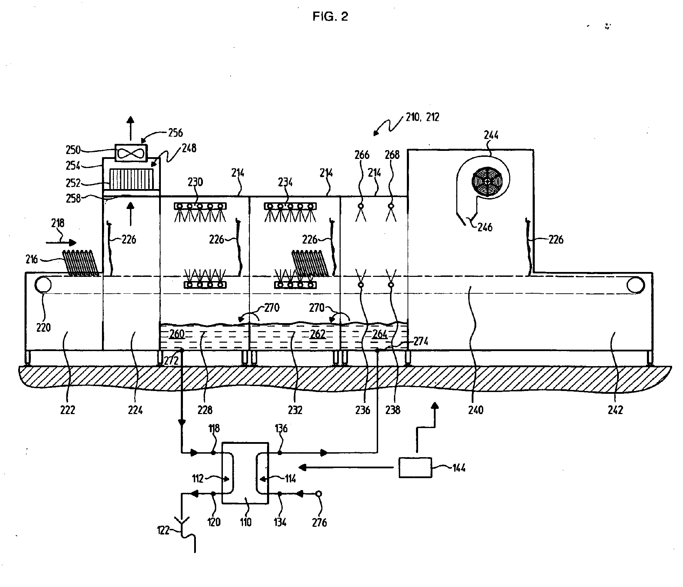

In Figur 2 ist ein mögliches Ausführungsbeispiel eines erfindungsgemäßen Reinigungsgeräts 210 dargestellt, in welchem die erfindungsgemäße Wärmerückgewinnungseinrichtung 110 eingesetzt werden kann. Das Reinigungsgerät 210 ist in diesem Ausführungsbeispiel als Durchlaufgeschirrspülmaschine 212 ausgestaltet und umfasst mehrere Reinigungskammern 214, welche von Reinigungsgut 216 in einer Durchlaufrichtung 218 durchlaufen werden. Der Transport des Reinigungsguts 216 erfolgt in der dargestellten Durchlaufgeschirrspülmaschine 212 mittels eines Transportbands 220. Die Durchlaufgeschirrspülmaschine 212 ist somit in diesem Ausführungsbeispiels als Bandtransport-Geschirrspülmaschine ausgestaltet. Auch andere Ausgestaltungen sind jedoch möglich, beispielsweise Korbtransportmaschinen. Für den Aufbau und die Funktionsweise der Durchlaufgeschirrspülmaschine 212 kann weitgehend auf die DE 10 2004 003 797 A1 verwiesen werden.

An einem Einlauf 222 läuft auf der Oberseite des Transportbandes 220 aufgenommenes Reinigungsgut 216 in einen Einlauftunnel 224 ein. Der Einlauftunnel 224 ist mittels eines Trennvorhangs 226 nach außen abgeschirmt, um den Austritt von Dampfwrasen im Bereich des Einlauftunnels 224 der Durchlaufgeschirrspülmaschine 212 zu verhindern. Nachdem das an der Oberseite des Transportbandes 220 aufgenommene Reinigungsgut 214 den Einlauftunnel 224 passiert hat, tritt es in die Reinigungskammern 214 ein, welche in mehrere Reinigungszonen unterteilt sind. Zunächst wird das Reinigungsgut 216 in eine Vorspülzone 228 transportiert. Innerhalb der Vorspülzone 228 ist ein Vorspülsystem 230 angeordnet. Das Vorspülsystem 230 weist Sprührohre auf, welche an der Unterseite bzw. oberhalb des umlaufenden Transportbandes 220 angeordnet sind. Über eine in Figur 2 nicht dargestellte, in ihrer Leistung regelbare Pumpe wird das Vorspülsystem 230 je nach Verschmutzungsgrad des Reinigungsguts 216 mit Reinigungsfluid beaufschlagt. Die Vorspülzone 228 ist über einen weiteren Trennvorhang 226 von einer sich anschließenden Spülzone 232 getrennt. Nach Passage der Vorspülzone 228 läuft das Reinigungsgut 216 in die Spülzone 232 ein. Die Spülzone 232 umfasst ebenfalls ein Spülsystem, bezeichnet durch das Bezugszeichen 234. Das Spülsystem 234 ist oberhalb und unterhalb der Unterseite des umlaufenden Transportbandes 220 angeordnet.

Die Spülzone 232 ist durch einen weiteren Trennvorhang 226 von einer Pumpenklarspülzone 236 getrennt, welche ein oberhalb und unterhalb der Oberseite des Transportbandes 220 angeordnetes Spülsystem in Gestalt von zwei einander gegenüberliegenden Sprührohren aufweist. An die Pumpenklarspülzone 236 schließt sich eine Frischwasserklarspülzone 238 an. Innerhalb der Frischwasserklarspülzone 238 wird das Reinigungsgut 216 mit Frischwasser abgespült, um verbliebene Verunreinigungen bzw. das zuvor aufgebrachte Reinigungsfluid vor Eintritt des Reinigungsguts in eine Trocknungszone 240 von diesem zu entfernen. Der Frischwasserklarspülzone 238 nachgeschaltet befindet sich ein (in Figur 2 nicht dargestellter) weiterer Trennvorhang 226, welcher die Frischwasserklarspülzone 238 von der Trocknungszone 240 trennt.

Innerhalb der Trocknungszone 240, welcher eine Abnahmestrecke 242 nachgeschaltet ist, befindet sich ein Trocknungsgebläse 244. Das Trocknungsgebläse 244 saugt Luft an und wärmt diese. Die im Trocknungsgebläse 244 erwärmte Luft tritt in einen Austrittstrichter 246 ein, an dessen unterem Ende sich eine Austrittsdüse befindet, welche die austretende Trocknungsluft auf das die Trocknungszone 244 passierende Reinigungsgut 216 lenkt. In Durchlaufrichtung 218 ist die Trocknungszone 244 über einen weiteren Trennvorhang 226 gegen die Abnahmestrecke 242 abgeschirmt.

Während des Transports des Reinigungsguts 216 durch die in Figur 2 dargestellte Durchlaufgeschirrspülmaschine 212 nimmt dessen Temperatur kontinuierlich zu. Von Raumtemperatur an steigt die Temperatur des Reinigungsguts 216 in der Vorspülzone 228 beispielsweise auf eine Temperatur von 40°C bis 45°C, entsprechend der Temperatur eines Vorspülfluids. In der sich daran anschließenden Spülzone 232 steigt die Temperatur auf ca. 55 bis 65°C, und in den sich daran anschließenden Pumpenklarspülzone 236 bzw. Frischwasserklarspülzone 238 auf eine Temperatur zwischen 60°C und 85°C, entsprechend dem dort verwendeten Klarspülfluid.

Zur Wärmerückgewinnung aus sich in den Reinigungskammern 214 bildenden Dampfwrasen weist die Durchlaufgeschirrspülmaschine 212 in dem in Figur 2 dargestellten Ausführungsbeispiel eine Abluft-Wärmerückgewinnungseinrichtung 248 auf, welche eine Gebläse 250 und einen Lamellenwärmetauscher 252 umfasst. Beide sind in einem Schacht 254 angeordnet, welcher in einer Abluftöffnung 256 mündet, in deren Bereich das Gebläse 250 angeordnet ist. Der Schacht 254 ist in diesem Ausführungsbeispiel im Bereich oberhalb des Einlauftunnels 224 angeordnet. Über das der Abluft-Wärmerückgewinnungseinrichtung 248 zugeordnete Gebläse 250 wird innerhalb der Durchlaufgeschirrspülmaschine 212 ein Unterdruck erzeugt, der die Absaugung eines Abluftstroms an einer Absaugstelle 258 ermöglicht. Mittels der Abluft-Wärmerückgewinnungseinrichtung 248 kann zum einen eine Wrasenbildung in der Umgebung der Durchlaufgeschirrspülmaschine 212 wirksam unterdrückt werden und es kann Wärme aus dem Abluftstrom wiedergewonnen und beispielsweise der Durchlaufgeschirrspülmaschine 212 wieder zugeführt werden.

Den einzelnen Zonen der Durchlaufgeschirrspülmaschine 212 sind jeweils Tanks 260, 262 und 264 zugeordnet. Aus einem Vorspültank 260 wird im Umwälzbetrieb das Vorspülsystem 230 gespeist. Aus einem Spültank 262 wird, ebenfalls im Umwälzbetrieb, das Spülsystem 234 gespeist, und aus dem Klarspültank 264 wird im Umwälzbetrieb das Pumpenklarspülsystem 266, welches der Pumpenklarspülzone 236 zugeordnet ist, gespeist. Das der Frischwasserklarspülzone 238 zugeordnete Frischwasserklarspülsystem 268 wird hingegen durch erhitztes Frischwasser gespeist. In Durchlaufrichtung 218 nimmt dabei die Temperatur innerhalb der Tanks 260, 262 und 264 zu, beispielsweise, wie oben beschrieben, von ca. 40 bis 45°C auf ca. 80 bis 90°C. Dabei nimmt gleichzeitig der Reinheitsgrad des Spülfluids innerhalb dieser Tanks 260, 262, 264 in Durchlaufrichtung 218 ab. Jeder der Tanks 260, 262 und 264 oder einzelne dieser Tanks können über ein eigenes Umwälzsystem verfügen, wobei beispielsweise das Spülfluid innerhalb dieser Tanks 260, 262, 264 ständig über einen Filter umgewälzt wird, um zumindest eine gewisse Reinheit in diesen Tanks 260, 262, 264 aufrechtzuerhalten. Weiterhin kann, wie in Figur 2 angedeutet, ein Kaskadenüberlauf 270 erfolgen, so dass sauberes Spülfluid jeweils vom in Durchlaufrichtung 218 nachgeordneten Tank in den vorhergehenden Tank überströmen kann.

Weiterhin ist in Figur 2 symbolisch dargestellt, wie eine Wärmerückgewinnungseinrichtung 110, beispielsweise die in Figur 1 dargestellte Wärmerückgewinnungseinrichtung 110, für die Wärmerückgewinnung aus dem Abwasser der Durchlaufgeschirrspülmaschine 212 genutzt werden kann. Zu diesem Zweck kann beispielsweise ein Ablauf 272 der Durchlaufgeschirrspülmaschine 212, beispielsweise ein mit dem Vorspültank 260 verbundene Ablauf 272, mit dem ersten Einlass 118 der Wärmerückgewinnungseinrichtung 110 verbunden sein. Der erste Auslass 120 dieser Wärmerückgewinnungseinrichtung 110 wird dann mit einem Abfluss 122 verbunden. Der zweite Auslass 136 der Wärmerückgewinnungseinrichtung 110 wird mit einem Einlass 274 des Klarspültanks 264 verbunden, so dass erwärmtes Wasser bzw. Spülfluid aus der Wärmerückgewinnungseinrichtung 110 zurück in den Klarspültank 264 fließen kann. Dabei kann der zweite Einlass 134 der Wärmerückgewinnungseinrichtung beispielsweise, wie in Figur 2 dargestellt, mit einem Frischwasserzulauf 276 direkt oder indirekt (das heißt zum Beispiel über eine Heizeinrichtung, beispielsweise einen Durchlauferhitzer) verbunden sein. Alternativ oder zusätzlich kann dieser zweite Einlass 134 auch mit einem Auslass des Klarspültanks 264 verbunden sein, so dass Klarspülflüssigkeit beispielsweise im Umwälzbetrieb durch die zweite Kammer 114 der Wärmerückgewinnungseinrichtung 110 geleitet wird. Der Frischwasserzulauf kann dann beispielsweise über das Frischwasserklarspülsystem 268 erfolgen, welches direkt oder indirekt mit einem Frischwasserzulauf 276 verbunden werden kann.

Weiterhin ist wiederum eine Steuerung 144 vorgesehen, welche beispielsweise die oben beschriebenen Funktionen der Überwachung eines Selbstreinigungsprozesses der Wärmerückgewinnungseinrichtung 110 wahrnehmen kann. Diese Steuerung 144 kann auch ganz oder teilweise mit einer zentralen Steuerung der Durchlaufgeschirrspülmaschine 212 zusammengefasst sein, kann jedoch auch dezentral zu dieser ausgebildet sein.

Auf diese Weise kann die dargestellte Durchlaufgeschirrspülmaschine 212 effizient sowohl die Abwärme der Abluft als auch die Abwärme der Spülflüssigkeiten nutzen und zumindest teilweise wiederverwerten. Die dargestellte Durchlaufgeschirrspülmaschine 212 ist somit äußerst energieeffizient und umweltfreundlich. Es sei darauf hingewiesen, dass die Wärmerückgewinnungseinrichtung 110 auch in anderen Ausgestaltungen als der in Figur 2 dargestellten Ausführungsform genutzt werden kann, beispielsweise in Form in einer anderen Verrohrung als der in Figur 2 dargestellten Verrohrung. Weiterhin können in dem Fluidsystem nicht dargestellte Pumpen, Ventile oder ähnliches aufgenommen sein, welche beispielsweise auch wiederum durch die Steuerung 144 gesteuert werden können, um den Wärmerückgewinnungsprozess und/oder den Selbstreinigungsprozess möglichst effizient und reibungslos zu steuern.

### Bezugszeichenliste

- 110: Wärmerückgewinnungseinrichtung
- 112: fluides Medium
- 114: Transportmedium
- 116: erste Kammer
- 118: erster Einlass
- 120: erster Auslass
- 122: Abfluss
- 124: Wärmetauscher
- 126: Wärmetauscherfläche
- 128: Wärmepumpe
- 130: Peltierelement
- 132: zweite Kammer
- 134: zweiter Einlass
- 136: zweiter Auslass
- 138: Tank
- 140: erste Seite Peltierelement
- 142: zweite Seite Peltierelement
- 144: Steuerung
- 146: Stromquelle
- 148: Verschmutzungssensoren
- 150: erster Temperatursensor
- 152: zweiter Temperatursensor
- 154: Signalleitungen
- 156: Heizeinrichtung
- 210: Reinigungsgerät
- 212: Durchlaufgeschirrspülmaschine
- 214: Reinigungskammern
- 216: Reinigungsgut
- 218: Durchlaufrichtung
- 220: Transportband
- 222: Einlauf
- 224: Einlauftrommel
- 226: Trennvorhang
- 228: Vorspülzone
- 230: Vorspülsystem
- 232: Spülzone
- 234: Spülsystem
- 236: Pumpenklarspülzone
- 238: Frischwasserklarspülzone
- 240: Trocknungszone
- 242: Abnahmestrecke
- 244: Trocknungsgebläse
- 246: Austrittstrichter
- 248: Abluft-Wärmerückgewinnungseinrichtung
- 250: Gebläse
- 252: Lamellenwärmetauscher
- 254: Schacht
- 256: Abluftöffnung
- 258: Absaugstelle
- 260: Vorspültank
- 262: Spültank
- 264: Klarspültank
- 266: Pumpenklarspülsystem
- 268: Frischwasserklarspülsystem
- 270: Kaskadenüberlauf
- 272: Ablauf
- 274: Einlass
- 276: Frischwasserzulauf

## Patentansprüche

1. Wärmerückgewinnungseinrichtung (110) zum Rückgewinnen von Wärmeenergie aus einem fluiden Medium (112), insbesondere für den Einsatz in einem Abwassersystem einer Geschirrspülmaschine (212), umfassend mindestens einen Wärmetauscher (124) mit mindestens einer Wärmetauscherfläche (126), weiterhin umfassend mindestens eine mit der Wärmetauscherfläche (126) thermisch gekoppelte Heizeinrichtung (156), wobei die Wärmerückgewinnungseinrichtung (110) weiterhin mindestens eine Steuerung (144) aufweist, wobei die Steuerung (144) eingerichtet ist, um einen Selbstreinigungsprozess des Wärmetauschers (124) durchzuführen, wobei bei dem Selbstreinigungsprozess die Wärmetauscherfläche (126) kurzfristig mittels der Heizeinrichtung (156) aufgeheizt wird, **dadurch gekennzeichnet, dass** mindestens ein Verschmutzungssensor (148) zur Detektion eines Verschmutzungsgrades der Wärmetauscherfläche (126) umfasst ist, welcher mindestens zwei Temperatursensoren (150, 152) umfasst, wobei eine Temperatur des fluiden Mediums (112) vor und nach einem Durchströmen und/oder Überströmen des Wärmetauschers (124) gemessen wird, wobei der Verschmutzungssensor (148) eingerichtet ist, um aus einer Differenz der beiden Temperaturen auf einen Verschmutzungsgrad zu schließen.

2. Wärmerückgewinnungseinrichtung (110) nach dem vorhergehenden Anspruch, wobei die Heizeinrichtung (156) mindestens eine Wärmepumpe umfasst.

3. Wärmerückgewinnungseinrichtung (110) nach dem vorhergehenden Anspruch, wobei die Steuerung (144) eingerichtet ist, um in mindestens einem Normalbetrieb der Wärmerückgewinnungseinrichtung (110) mittels der Wärmepumpe mindestens ein Transportmedium (114), auf welches dem fluiden Medium (112) entzogene Wärme übertragen wird, auf mindestens eine Zieltemperatur zu erwärmen.

4. Wärmerückgewinnungseinrichtung (110) nach einem der beiden vorhergehenden Ansprüche, wobei die Wärmepumpe mindestens eine thermoelektrische Wärmepumpe aufweist, insbesondere mindestens ein Peltierelement (130).

5. Wärmerückgewinnungseinrichtung (110) nach dem vorhergehenden Anspruch, wobei die Steuerung (144) eingerichtet ist, um die Wärmepumpe, insbesondere das Peltierelement (130), in dem Selbstreinigungsprozess elektrisch umzupolen.

6. Wärmerückgewinnungseinrichtung (110) nach einem der vorhergehenden Ansprüche, wobei die Steuerung (144) eingerichtet ist, um bei Erreichen oder Überschreiten eines vorgegebenen Verschmutzungsgrades den Reinigungsprozess durchzuführen, insbesondere um den Reinigungsprozess automatisch durchzuführen.

7. Wärmerückgewinnungseinrichtung (110) nach einem der vorhergehenden Ansprüche, wobei der Verschmutzungssensor (148) mindestens einen der folgenden Sensoren umfasst: einen optischen Verschmutzungssensor; einen elektrischen Verschmutzungssensor, insbesondere einen auf einer elektrischen Widerstandsmessung basierenden Verschmutzungssensor; einen kapazitiven Verschmutzungssensor.

8. Reinigungsgerät (210) zum Reinigen mindestens eines Reinigungsgutes, insbesondere umfassend eine Geschirrspülmaschine (212) zum Reinigen von Reinigungsgut (216), wobei das Reinigungsgerät (210) mindestens eine Reinigungskammer (214) zur Beaufschlagung des Reinigungsgutes (216) mit mindestens einem Reinigungsfluid umfasst, wobei das Reinigungsgerät (210) weiterhin mindestens ein Abwassersystem zur Ableitung verbrauchten Reinigungsfluids umfasst, wobei das Reinigungsgerät (210) weiterhin mindestens eine mit dem Abwassersystem gekoppelte Wärmerückgewinnungseinrichtung (110) nach einem der vorhergehenden Ansprüche aufweist und eingerichtet ist, um rückgewonnene Wärme einem Reinigungsprozess wieder zuzuführen.

9. Reinigungsgerät (210) nach dem vorhergehenden Anspruch, wobei verbrauchtes Reinigungsfluid die Wärmerückgewinnungseinrichtung (110) kontinuierlich oder chargenweise durchströmt.

10. Reinigungsgerät (210) nach einem der beiden vorhergehenden Ansprüche, wobei das Reinigungsgerät (210) mindestens ein Klarspülsystem (266, 268) zur Beaufschlagung des Reinigungsgutes (216) mit mindestens einem Klarspülfluid umfasst, wobei mittels der Wärmerückgewinnungseinrichtung (110) Wärme auf das Klarspülfluid übertragen wird.

11. Reinigungsgerät (210) nach einem der vorhergehenden, auf ein Reinigungsgerät (210) gerichteten Ansprüche, wobei das Reinigungsgerät (210) mindestens eines der folgenden Reinigungsgeräte (210) umfasst: eine Durchlaufgeschirrspülmaschine (212) mit mindestens zwei von dem Reinigungsgut nacheinander zu durchlaufenden Reinigungszonen; eine gewerbliche Einkammergeschirrspülmaschine mit mindestens einem von der Reinigungskammer (214) getrennten Tank (138; 260, 262, 264), insbesondere einem Boiler.

12. Verfahren zum Rückgewinnen von Wärmeenergie aus einem fluiden Medium (112), insbesondere für den Einsatz in einem Abwassersystem einer Geschirrspülmaschine (212), unter Verwendung einer Wärmerückgewinnungseinrichtung (110) nach einem der vorhergehenden, auf eine Wärmerückgewinnungseinrichtung (110) gerichteten Ansprüche, wobei in einem Normalbetrieb dem fluiden Medium (112) mittels mindestens eines Wärmetauschers (124) mit mindestens einer Wärmetauscherfläche (126) Wärme entzogen wird, wobei in einem Selbstreinigungsprozess die Wärmetauscherfläche (126) kurzfristig aufgeheizt wird, wobei Verunreinigungen von der Wärmetauscherfläche (126) zumindest teilweise entfernt werden.

13. Verfahren nach dem vorhergehenden Anspruch, wobei die von der Wärmetauscherfläche (126) entfernten Verunreinigungen in dem fluiden Medium (112) gelöst und/oder dispergiert und/oder emulgiert werden und/oder von dem fluiden Medium (112) weggeschwemmt werden.

14. Verfahren nach einem der beiden vorhergehenden Ansprüche, wobei zum Aufheizen der Wärmetauscherfläche (126) im Selbstreinigungsprozess mindestens eine Wärmepumpe verwendet wird, insbesondere ein Peltierelement (130), wobei die Wärmepumpe im Normalbetrieb verwendet wird, um ein Transportmedium (114), welches mittels der dem fluiden Medium (112) entzogenen Wärme aufgeheizt wird, auf ein höheres Temperaturniveau anzuheben.

15. Verfahren nach einem der vorhergehenden Verfahrensansprüche, wobei eine von dem fluiden Medium (112) an den Wärmetauscher (124) und/oder ein mit dem Wärmetauscher (124) thermisch gekoppeltes Transportmedium (114) übertragene Wärmemenge und/oder Wärmeleistung erfasst wird und aus dieser übertragenen Wärmemenge und/oder Wärmeleistung auf einen Verschmutzungsgrad der Wärmerückgewinnungseinrichtung (110), insbesondere des Wärmetauschers (124), geschlossen wird.

## Claims

1. Heat recovery device (110) for recovering thermal energy from a fluid medium (112), in particular for use in a wastewater system of a dishwasher (212), comprising at least one heat exchanger (124) having at least one heat exchanger surface (126), further comprising at least one heating device (156) which is thermally coupled to the heat exchanger surface (126), wherein the heat recovery device (110) further has at least one control means (144), wherein the control means (144) is designed in order to carry out a self-cleaning process of the heat exchanger (124), wherein the heat exchanger surface (126) is briefly heated by means of the heating device (156) during the self-cleaning process, **characterized in that** at least one soiling sensor (148) for detecting a degree of soiling of the heat exchanger surface (126) is comprised, the said soiling sensor comprising at least two temperature sensors (150, 152), wherein a temperature of the fluid medium (112) is measured before and after the said fluid flows through and/or across the heat exchanger (124), wherein the soiling sensor (148) is designed in order to calculate a degree of soiling from a difference between the two temperatures.

2. Heat recovery device (110) according to the preceding claim, wherein the heating device (156) comprises at least one heat pump.

3. Heat recovery device (110) according to the preceding claim, wherein the control means (144) is designed in order to heat at least one transportation medium (114), on which heat which is drawn from the fluid medium (112) is transferred, to at least one target temperature by means of the heat pump in at least one normal mode of the heat recovery device (110).

4. Heat recovery device (110) according to one of the two preceding claims, wherein the heat pump has at least one thermoelectric heat pump, in particular at least one Peltier element (130).

5. Heat recovery device (110) according to the preceding claim, wherein the control means (144) is designed in order to electrically reverse the polarity of the heat pump, in particular the Peltier element (130), in the self-cleaning process.

6. Heat recovery device (110) according to one of the preceding claims, wherein the control means (144) is designed in order to carry out the cleaning process when a prespecified degree of soiling is reached or exceeded, in particular in order to automatically carry out the cleaning process.

7. Heat recovery device (110) according to one of the preceding claims, wherein the soiling sensor (148) comprises at least one of the following sensors: an optical soiling sensor; an electrical soiling sensor, in particular a soiling sensor which is based on an electrical resistance measurement; and a capacitive soiling sensor.

8. Cleaning appliance (210) for cleaning at least one item of washware, in particular comprising a dishwasher (212) for cleaning washware (216), wherein the cleaning appliance (210) comprises at least one cleaning chamber (214) for subjecting the washware (216) to the action of at least one cleaning fluid, wherein the cleaning appliance (210) further comprises at least one wastewater system for discharging consumed cleaning fluid, wherein the cleaning appliance (210) further has at least one heat recovery device (110) according to one of the preceding claims which is coupled to the wastewater system and is designed in order to return recovered heat to a cleaning process.

9. Cleaning appliance (210) according to the preceding claim, wherein consumed cleaning fluid flows through the heat recovery device (110) in a continuous manner or in batches.

10. Cleaning appliance (210) according to one of the two preceding claims, wherein the cleaning appliance (210) comprises at least one final-rinse system (266, 268) for subjecting the washware (216) to the action of at least one final-rinse fluid, wherein heat is transferred to the final-rinse fluid by means of the heat recovery device (110).

11. Cleaning appliance (210) according to one of the preceding claims which is directed at a cleaning appliance (210), wherein the cleaning appliance (210) comprises at least one of the following cleaning appliances (210): a conveyor-type dishwasher (212) having at least two cleaning zones through which the washware is intended to pass in succession; and a commercial single-chamber dishwasher having at least one tank (138; 260, 262, 264) which is separate from the cleaning chamber (214), in particular a boiler.

12. Method for recovering thermal energy from a fluid medium (112), in particular for use in a wastewater system of a dishwasher (212), using a heat recovery device (110) according to one of the preceding claims which is directed at a heat recovery device (110), wherein heat is drawn from the fluid medium (112) by means of at least one heat exchanger (124) having at least one heat exchanger surface (126) in a normal mode, wherein the heat exchanger surface (126) is briefly heated in a self-cleaning process, wherein impurities are at least partially removed from the heat exchanger surface (126).

13. Method according to the preceding claim, wherein the impurities which are removed from the heat exchanger surface (126) are dissolved and/or dispersed and/or emulsified in the fluid medium (112) and/or are carried away by the fluid medium (112).

14. Method according to one of the two preceding claims, wherein at least one heat pump, in particular a Peltier element (130), is used to heat the heat exchanger surface (126) in the self-cleaning process, wherein the heat pump is used in order to raise a transportation medium (114), which is heated by means of the heat which is drawn from the fluid medium (112), to a higher temperature level in the normal mode.

15. Method according to one of the preceding method claims, wherein a quantity of heat and/or a heating capacity which is transferred from the fluid medium (112) to the heat exchanger (124) and/or to a transportation medium (114) which is thermally coupled to the heat exchanger (124) is detected, and a degree of soiling of the heat recovery device (110), in particular of the heat exchanger (124), is calculated from this transferred quantity of heat and/or heating capacity.

## Revendications

1. Dispositif de récupération de chaleur (110) pour la récupération d'énergie thermique à partir d'un milieu fluide (112), en particulier destiné à être utilisé dans un système d'eaux usées d'un lave-vaisselle (212), comprenant au moins un échangeur de chaleur (124) avec au moins une face d'échangeur de chaleur (126), comprenant en outre au moins un dispositif de chauffage (156) thermiquement couplé à la face d'échangeur de chaleur (126), dans lequel le dispositif de récupération de chaleur (110) présente en outre au moins une commande (144), la commande (144) étant configurée pour exécuter un processus d'autonettoyage de l'échangeur de chaleur (124), dans lequel la face d'échangeur de chaleur (126) est chauffée brièvement au moyen du dispositif de chauffage (156) lors du processus d'autonettoyage, **caractérisé en ce qu'**il comprend au moins un détecteur d'encrassement (148) pour détecter un degré d'encrassement de la face d'échangeur de chaleur (126), lequel comprend au moins deux capteurs de température (150, 152), dans lequel on mesure une température du milieu fluide (112) avant et après un écoulement à travers et/ou un écoulement sur l'échangeur de chaleur (124), le détecteur d'encrassement (148) étant configuré pour déduire un degré d'encrassement à partir d'une différence des deux températures.

2. Dispositif de récupération de chaleur (110) selon la revendication'précédente, dans lequel le dispositif de chauffage (156) comprend au moins une pompe à chaleur.

3. Dispositif de récupération de chaleur (110) selon la revendication précédente, dans lequel la commande (144) est configurée pour chauffer à au moins une température ciblée, dans au moins un fonctionnement normal du dispositif de récupération de chaleur (110), au moyen de la pompe à chaleur, au moins un milieu de transport (114), auquel la chaleur soutirée du milieu fluide (112) est transmise.

4. Dispositif de récupération de chaleur (110) selon l'une quelconque des deux revendications précédentes, dans lequel la pompe à chaleur présente au moins une pompe à chaleur thermoélectrique, en particulier un élément Peltier (130).

5. Dispositif de récupération de chaleur (110) selon la revendication précédente, dans lequel la commande (144) est configurée pour inverser la polarité électrique de la pompe à chaleur, en particulier de l'élément Peltier (130), dans le processus d'autonettoyage.

6. Dispositif de récupération de chaleur (110) selon l'une quelconque des revendications précédentes, dans lequel la commande (144) est configurée pour effectuer le processus d'autonettoyage, en particulier pour effectuer automatiquement le processus d'autonettoyage, lorsqu'un degré d'encrassement prédéterminé est atteint ou dépassé.

7. Dispositif de récupération de chaleur (110) selon l'une quelconque des revendications précédentes, dans lequel le détecteur d'encrassement (148) comprend au moins un des détecteurs suivants: un détecteur d'encrassement optique; un détecteur d'encrassement électrique, én particulier un détecteur d'encrassement basé sur une mesure de la résistance électrique; un détecteur d'encrassement capacitif.

8. Appareil de nettoyage (210) destiné au nettoyage d'au moins un article à nettoyer, comprenant en particulier un lave-vaisselle (212) destiné au nettoyage d'articles à nettoyer (216), dans lequel l'appareil de nettoyage (210) comprend au moins une chambre de nettoyage (214) pour exposer les articles à nettoyer (216) à au moins un fluide de nettoyage, dans lequel l'appareil de nettoyage (210) comprend en outre au moins un système d'eaux usées pour l'évacuation du fluide de nettoyage usagé, dans lequel l'appareil de nettoyage (210) présente en plus au moins un dispositif de récupération de chaleur (110) selon l'une quelconque des revendications précédentes, couplé au système d'eaux usées, et est configuré pour renvoyer la chaleur récupérée à un processus de nettoyage.

9. Appareil de nettoyage (210) selon la revendication précédente, dans lequel le fluide de nettoyage usagé circule en continu ou par charges à travers le dispositif de récupération de chaleur (110).

10. Appareil de nettoyage (210) selon l'une quelconque des deux revendications précédentes, dans lequel l'appareil de nettoyage (210) comprend au moins un système de rinçage (266, 268) destiné à exposer les articles à nettoyer (216) à au moins un fluide de rinçage, dans lequel de la chaleur est transmise au fluide de rinçage au moyen du dispositif de récupération de chaleur (110).

11. Appareil de nettoyage (210) selon l'une quelconque des revendications précédentes relatives à un appareil de nettoyage (210), dans lequel l'appareil de nettoyage (210) comprend au moins un des appareils de nettoyage (210) suivants: un lave-vaisselle continu (212) avec au moins deux zones de nettoyage à traverser, l'une après l'autre par les articles à nettoyer; un lave-vaisselle professionnel à une chambre avec au moins un réservoir (138; 260, 262, 264) séparé de la chambre de nettoyage (214), en particulier un chauffe-eau.

12. Procédé de récupération d'énergie thermique à partir d'un milieu fluide (112), en particulier destiné à être utilisé dans un système d'eaux usées d'un lave-vaisselle (212), avec utilisation d'un dispositif de récupération de chaleur (110) selon l'une quelconque des revendications précédentes relatives à un dispositif de récupération de chaleur (110), dans lequel on soutire, au cours d'un fonctionnement normal, de la chaleur à partir du milieu fluide (112) au moyen d'au moins un échangeur de chaleur (124) comportant au moins une face d'échangeur de chaleur (126), dans lequel on chauffe brièvement la face d'échangeur de chaleur (126) au cours d'un processus d'autonettoyage, des impuretés étant au moins partiellement éliminées de la face d'échangeur de chaleur (126).

13. Procédé selon la revendication précédente, dans lequel on dissout et/ou on disperse et/ou on émulsifie dans le milieu fluide (112) les impuretés éliminées de la face d'échangeur de chaleur (126) et/ou on les élimine du milieu fluide (112) par flottation.

14. Procédé selon l'une quelconque des deux revendications précédentes, dans lequel on utilise pour le chauffage de la face d'échangeur de chaleur (126) dans le processus d'autonettoyage au moins une pompe à chaleur, en particulier un élément Peltier (130), dans lequel on utilise la pompe à chaleur en fonctionnement normal pour élever à un niveau de température plus élevé un milieu de transport (114), qui est chauffé au moyen de la chaleur soutirée du milieu fluide (112).

15. Procédé selon l'une quelconque des revendications de procédé précédentes, dans lequel on détecte une quantité de chaleur et/ou une puissance thermique transmise par le milieu fluide (112) à l'échangeur de chaleur (124) et/ou à un milieu de transport (114) thermiquement couplé à l'échangeur de chaleur (124) et on déduit de cette quantité de chaleur et/ou de cette puissance thermique transmise un degré d'encrassement du dispositif de récupération de chaleur (110), en particulier de l'échangeur de chaleur (124).
